# EUROPEAN PATENT APPLICATION

(11) **EP 2 765 323 A1**
(43) Date of publication of application: **13.08.2014**
(21) Application number: 14153641.7
(22) Date of filing: 03.02.2014
(51) Int. Cl.: F16D 65/092

(54) **Fine edge brake backing plate**

(30) Priority: 06.02.2013 CA 2805195
(71) Applicant: Arbesman, Ray, Toronto, Ontario M5P 1V2 (CA)
(72) Inventor: Arbesman, Ray, Toronto, Ontario M5P 1V2 (CA)
(74) Representative: Bates, Alan Douglas Henry

(57) **Abstract**

A brake plate is provided that has a substantially planar metallic body having a first friction facing surface and a second opposing caliper facing surface. The plate has a thickness between the first and second surfaces. The body is formed by stamping a metallic material such that edges include a rollover area (210), a shaved area (260) and a fratured area or 'break' (270), the shaved area covering at least 75% of the thickness.

## Description

### FIELD OF INVENTION

The invention relates to backing plates for use in disc brake pads.

### BACKGROUND OF THE INVENTION

Modern vehicle brake systems allow for slowing or stopping movement of the vehicle in a controlled manner. A typical automobile or light truck brake system includes a disc brake assembly for each of the front wheels and either a drum brake assembly or a disc brake assembly for each of the rear wheels. The brake assemblies are actuated by hydraulic or pneumatic pressure generated when an operator of the vehicle depresses a brake pedal. The structures of these drum brake assemblies and disc brake assemblies, and their actuators, are well known in the art.

A typical disc brake assembly includes a rotor which is secured to the wheel of the vehicle for rotation therewith. The rotor has a pair of opposed friction faces which are selectively engaged by portions of a caliper assembly. The caliper assembly is slidably supported by pins secured to an anchor plate. This anchor plate is in turn secured to a non-rotatable component of the vehicle, such as the vehicle frame. A pair of brake pads (shoes) are disposed in the caliper assembly on opposite sides of the rotor. These brake pads are operatively connected to one or more hydraulically actuated pistons for movement between a non-braking position, wherein they are spaced apart from the opposed friction faces of the rotor; and a braking position, wherein they are moved into frictional engagement with the rotor.

Depressing the brake pedal causes the piston to urge the brake pads from the non-braking position to the braking position, frictionally engaging the brake pads to the rotor and thereby slowing or stopping the rotation of the associated wheel of the vehicle.

The brake pads have a tight tolerance in the caliper assembly. And the tolerance limits are becoming increasingly exacting with the passage of time, as original equipment specifications become more stringent.

As an illustration of this change over time, consider:
Toyota Land Cruiser 1988-1997 - brake runout limit 0.0059
Toyota Land Cruiser 1998-2007 - brake runout limit 0.0028
Toyota Land Cruiser 2008-2011 - brake runout limit 0.0019

Under such tight tolerances, aftermarket suppliers have been hard pressed to economically manufacture pads that meet these specifications to perform up to OE standards.

Brake system designs have changed and the demands on the component suppliers have increased regarding flatness and critical dimension tolerances, edge perpendicularity, reduced edge rollover and design complexity. In many cases these demands have created inefficiencies for the backing plate suppliers, resulting in higher price points through the supply chain.

The brake backing plate that is the metal foundation of the brake pad must be manufactured to meet these exacting specifications. However, conventional stamping processes may not result in an edge condition that meets requirements. Further, conventional stamping leaves unacceptable rollover. Further, conventional stamping does not provide desired flatness.

Fineblanking has been suggested for brake backing plates, and is a well-respected process with good edge condition, rollover and flatness results. However, the cost of production is frequently prohibitive for manufactured aftermarket plates. Further, the fineblanking tooling is specialized and expensive and needs frequent changeovers. Tool life is very short compared to conventional stamping/blanking tooling.

It would be desirable to gain some of the characteristics of fineblanked plates while using a more conventional type of tooling.

### SUMMARY OF THE INVENTION

According to a first aspect of the invention, a brake plate is provided with a substantially planar metallic body that has a first friction facing surface and a second opposing caliper facing surface. The plate has a thickness between the first and second surfaces. The body is formed by stamping from a metallic material such that edges of the body are shaved along at least 75% of the thickness.

Preferably, the body is formed by stamping from the second surface to the first surface. The stamping creates a material break prior to the first surface, such that no burr removal operation is required.

Preferably, the stamping creates an edge rollover less than 0.70 mm in depth. Preferably, the stamping creates an edge rollover less than 1.8 mm in width.

The body may be stamped to perfect flat or directional flatness in the range of ±0.1 mm. Preferably, the forming includes applying a counterpressure to flatten the plate. In one embodiment, the plate is flattened while stamping. Alternatively, the plate may be flattened post-stamping.

The body may be stamped from a continuous metallic material, or from a precut workpiece of metallic material. Various metals may be used. In one embodiment, the material is steel.

### BRIEF DESCRIPTION OF THE FIGURES

Figs. 1A-1C are rollover views of abutment ends of brake backing plates (Fig. 1A is a conventional stamped plate, Fig. 1B is a fineblanked plate, Fig. 1C is a plate according to the present invention).
Figs. 2A-2C are rollover views of abutment ends showing the rollover start position (Fig. 2A is a conventional stamped plate, Fig. 2B is a fineblanked plate, Fig. 2C is a plate according to the present invention).
Fig. 3 is a detailed perspective view of a backing plate according to the present invention, showing edge condition.
Fig. 4 is a front view of the backing plate (seen from the caliper facing surface) with inset showing abutment edge condition.
Fig. 5 is a view of the finished (shimmed) brake pad in a caliper assembly (housing removed to show bracket detail) with inset showing relative pad and rotor position in caliper assembly.
Fig. 6 is a detail view of the abutment of Fig. 5 in caliper bracket channel.
Figs. 7A-7C show stages of shearing with a punch and die.
Fig. 7D shows detail of sheared area showing rollover, shaved and fracture (break) areas relative to plate thickness.

### DETAILED DESCRIPTION

A brake backing plate 100 is provided with a substantially planar metallic body that has a first friction facing surface 120 and a second opposing caliper facing surface 110. The plate has a thickness **180** between the first and second surfaces. The plate is stamped from a metallic material such that its edges are shaved along at least 75% of the thickness.

The plate has an upper edge **170** and a lower edge **190** and side edges having abutment ends **160.**

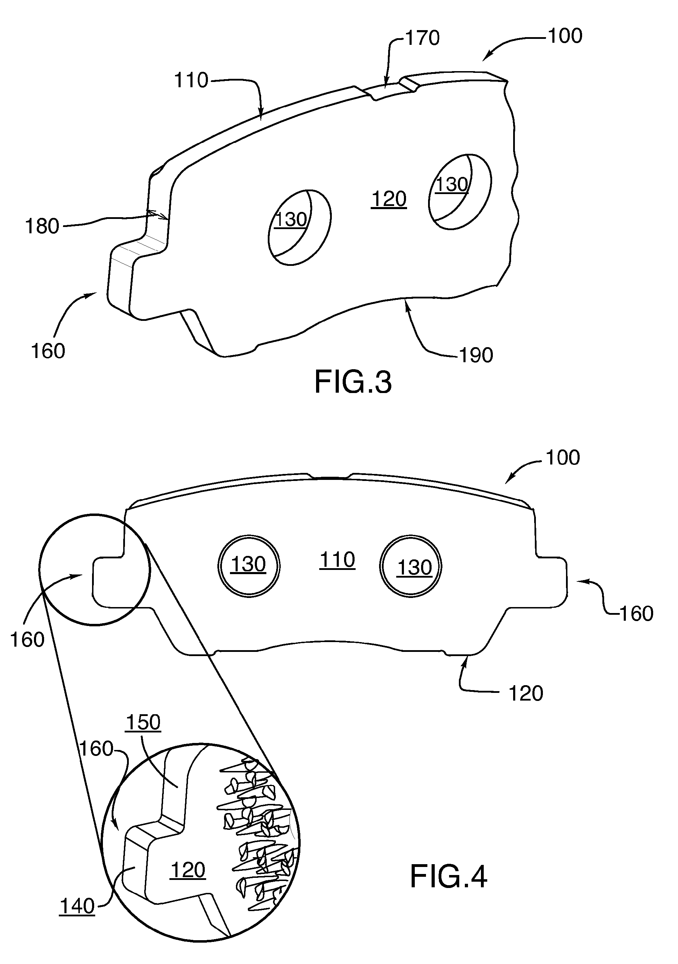

A backing plate **100** is one portion of the brake pad **350.** The backing plate **100** is attached to a friction material **200** (typically a molded composite material that is attached to the plate with one or a combination of rivets, adhesive, integral-molding, or frictional attachment - e.g. NRS^{®}). The plate shown in the figures is an IM (integrally molded) plate, having integral-molding holes **130** into which friction material flows and hardens to solidify and retain friction material on the surface. It will be appreciated that the plate may alternatively be a solid body plate (having no integral-molding holes) and may have other friction-attaching surface features (e.g. as shown in Fig. 3), the details of which are known in the art, and are not generally within the scope of the present invention. (Note that the friction material in any of these methods does not extend all the way out to the edges of the plate. An exposed gap is maintained around the perimeter of the plate.)

The shapes and dimensions of brake backing plates vary widely depending on application. The shape shown in the drawings is merely exemplary of one type for certain models of passenger vehicles, but the invention is not limited to this type/application.

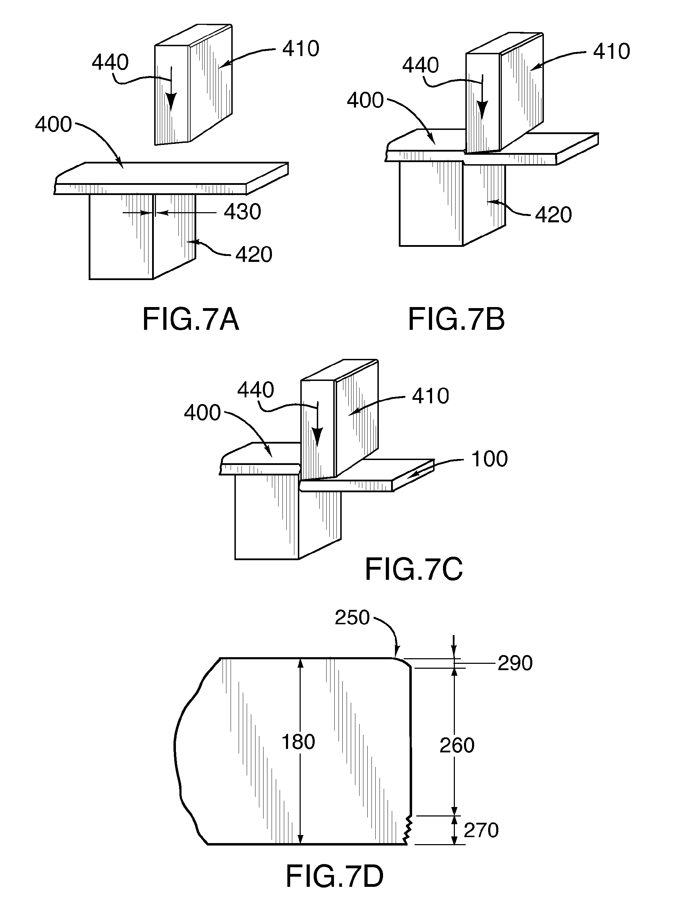

Cutting metal for brake backing plates involves the metalworking process known as stamping or blanking. As shown in basic outline in Figs. 7A-7C, a shearing force **440** is applied to sheet metal **400** until the shear stress in the material exceeds its ultimate shear strength at which point the material fails and separates at the cut location. This shearing force is typically applied by two tools, one above and one below the metal sheet (e.g. a punch **410** and die **420).** The shear force **440** is applied in a quick downward strike. When the punch or blade impacts the sheet, the clearance between the tools allows the sheet to plastically deform and form a "rollover" **210** in the area where the tool enters the material. A small clearance **430** is present between the edges of the upper and lower tools, which facilitates the fracture of the material. This cutting process results in a shaved area **260** and a fractured (or "break") area **270.** The break area **270** is rough and uneven while the shaved area **260** is smooth and flat. Accordingly, for maximum flatness and smooth edge condition, it is desirable to minimize the break area **270** and maximize the shaved area **260.** The proportion of the edge thickness that is shaved depends on several factors, including the sharpness of the tools and the clearance between the tools.

It is also desirable to minimize the rollover area as this is an area that disrupts the flatness of the surface **110** and the flatness and perpendicularity of edge surface **140.**

In fineblanking, the blank is sheared from sheet stock by applying 3 separate forces. The first is a downward holding force applied to the top of the sheet. A clamping system holds a guide plate tightly against the sheet. The sheet is held in place with a V-ring (also called an "impingement ring" or "stinger"), that surrounds the perimeter of the blanking location. The second force is applied underneath the sheet, directly opposite the punch, by a "cushion". This cushion provides a counterforce during the blanking process and later ejects the blank. These two forces reduce the bending of the sheet and improve the flatness of the blank. The final force is provided by the blanking punch impacting the sheet and shearing the blank into a die opening. In fineblanking, a small clearance between the punch and the die is used, and the blanking is performed at slower speeds than conventional stamping. As a result, instead of the material fracturing to free the blank, the blank flows and is extruded from the sheet, providing a smoother edge. However, a slight burr is formed on the part as it leaves the die. On brake backing plates, this burr needs to be removed from the plate in a secondary operation.

Using a hybrid stamping methodology, the present invention allows more precise disc brake backing plates to be produced under more economical conditions than fineblanking.

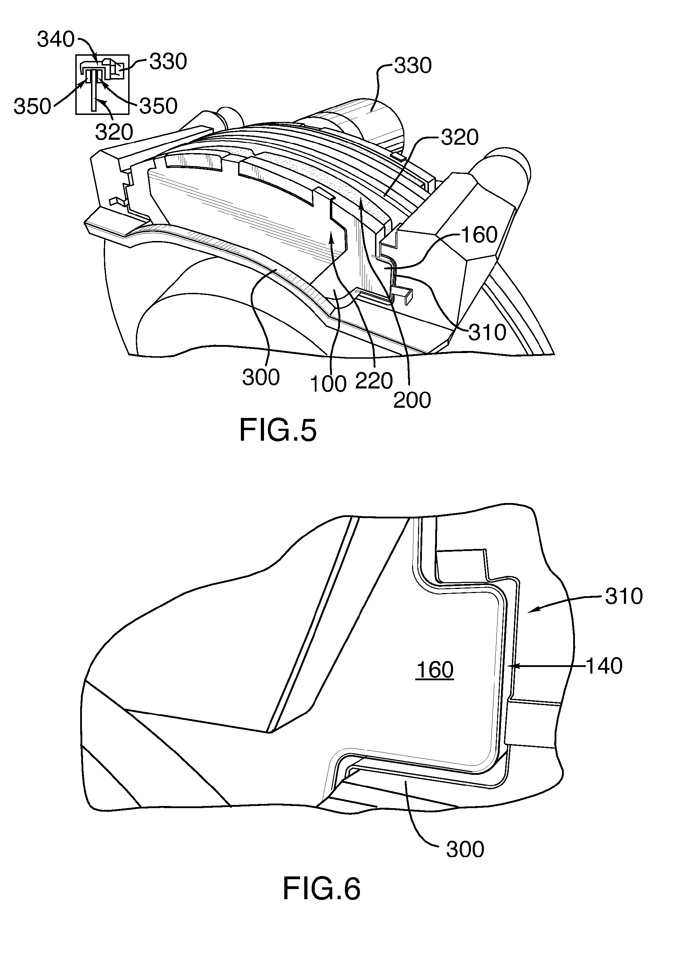

Turning to Fig. 5, the brake pad is a critical part of the overall brake assembly. The brake pads 350 form opposing surfaces on either side of the rotor assembly **320,** actuated by piston **330.** The pads may be mounted by abutment surfaces (ends of the backing plate **100** that are exposed - not covered by friction material). The abutment ends **160** slot into complementary channels **310** in the caliper bracket **300.** The brake pads **350** must be allowed to glide within these channels in order for the brakes to work smoothly and safely. If the abutment ends are under tolerance (i.e. too loosely fitted) within the channels, this can create excess brake noise and rattle. If over tolerance (i.e. too snugly fitted) within the channels, this can cause excessive brake drag as the pad's intended movement is restricted.

The edge condition **150** (i.e. the relative flatness, smoothness and perpendicularity) of the backing plate (and in particular, the condition of the cut edge of each abutment **140),** is also critical for brake performance. There is little clearance in modern caliper brackets and it is important to have a clean sheared edge to improve glide in the channels, prevent hardware wear, uneven pad wear, brake drag and brake binding.

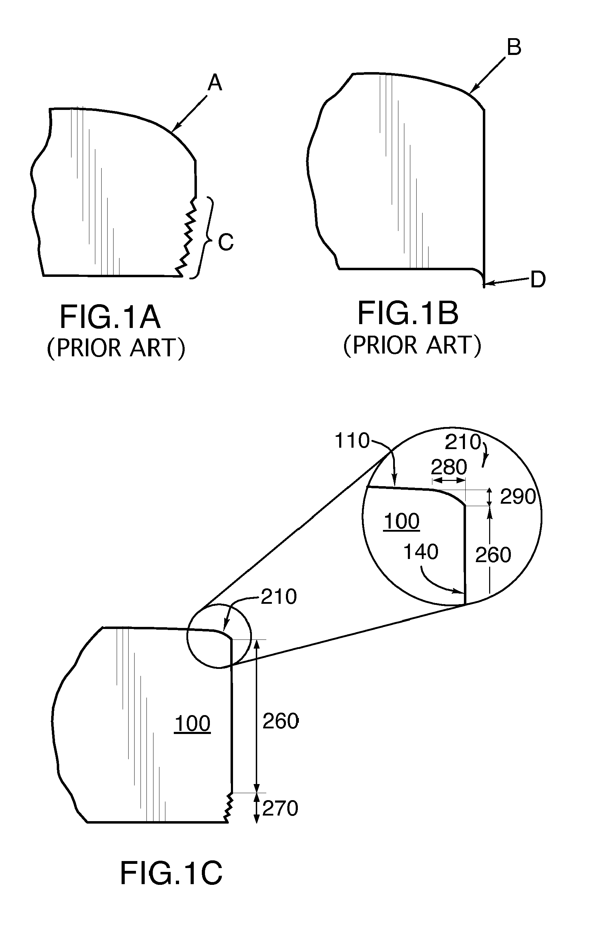

By controlling the stamping process (minimizing clearance and using specific sharpness and tool speed), the shaved edge can maximized while minimizing corner rollover. At the same time, no burr is formed of removed material (unlike fineblanking). The contrast is shown in Figures 1A-1C. Figure 1A shows a conventionally stamped backing plate. There is a large rollover area **A** and a large break **C.** The portion of the surface **110** that is flat is reduced and the side portion with a clean shear is also reduced (approximately 30% of the plate thickness is clean shear). This may result in more rattle and/or poor fit and glide in the caliper bracket. Figure 1B shows a fineblanked backing plate. Although the rollover area **B** is smaller than the rollover area **A** in conventional stamped plate, and the shaved edge is maximized (approximately 80% of plate thickness is clean shear), the removed material forms an undesirable burr **D** below surface **120** that needs to be removed in a secondary (grinding or cutting) operation. By contrast, the hybrid stamping method of the present invention results in plate shown in Figure 1C. The rollover area **210** is very small, the shaved area **260** is 75% of the edge thickness or more, and there is a very small break/fracture area **270,** which is tolerable since it avoids the need for extra burr-removal operations. As shown in the inset, both the rollover width **280** and depth **290** are minimized, so that the maximum area of flat surface **110** is kept flat, while the maximum area of edge **140** is also kept flat.

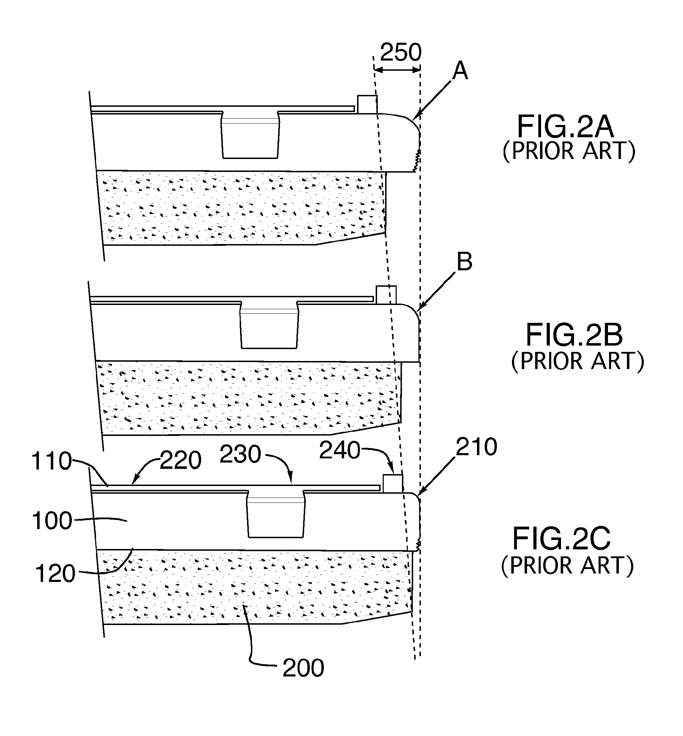

The other effect of the reduced rollover is the enhanced ability to utilize surface **110** of the plate. Surface **110** is the surface that is contacted by the piston and/or the caliper in the brake assembly. It is desirable to maximize the surface area that is perfectly flat (or dimensionally flat) to enable a broader shim **220** coverage (allowing tabs or clips **230** to be positioned further out toward the periphery) and to ensure maximum flat contact with the brake assembly. As shown in Figs. 2A-2C, this also allows the surface features like raised projection **240** to be positioned further out toward the periphery of the plate (where they do not interrupt the continuous flat contact surface of the plate). With a reduced rollover **210,** such features can be positioned very near the edge of the plate. The starting point of the rollover **250** is closer to the edge, as compared with prior conventionally stamped backing plates (shown in Fig. 2A) and fineblanked backing plates (shown in Fig. 2B).

Flatness is also critical for the pad to properly mate with surfaces in the brake caliper **340.** This ensures that brake load is evenly distributed and prevents brake drag. If a plate is not flat, it can result in rough braking as the pad rocks under load. The pad may also pivot on machined surfaces in the caliper leading to uneven contact with the rotor and consequent uneven component wear. To control flatness of the plate, minimizing rollover (and providing a "late start" rollover) maximizes the undisturbed flat area of the plate. Overall plate flatness can also be adjusted in the stamping process (either by flattening in the stamping/blanking step, or as a separate step).

Not using fineblanking equipment and processes has other benefits - namely, reduced material consumption, equipment and tooling cost, manufacturing downtime and maintenance cost. Since there is no need for a V-ring (or stinger) clearance, more of the material may be used for plates (less scrap) and the progressions can be made closer together. It is believed that where plate shapes nest perfectly (i.e. upper **170** and lower surfaces **190** of the plate outline are complementary), this can result in material consumption savings of up to a factor of 3.75 thicknesses of material per plate.

The foregoing description illustrates only certain preferred embodiments of the invention. The invention is not limited to the foregoing examples. That is, persons skilled in the art will appreciate and understand that modifications and variations are, or will be, possible to utilize and carry out the teachings of the invention described herein. The scope of the claims should not be limited by the preferred embodiments set forth in the examples, but should be given the broadest purposive construction consistent with the description as a whole.

## Claims

1. A brake plate comprising a substantially planar metallic body having:
a first friction facing surface;
a second opposing caliper facing surface; the plate having a thickness between the first and second surfaces;
the body being formed by stamping a metallic material such that edges of the body are shaved along at least 75% of the thickness.

2. The brake plate of claim 1, wherein the body is formed by stamping from the second surface to the first surface and the stamping creates a material break prior to the first surface, such that no burr removal operation is required.

3. The brake plate of any preceding claim, wherein the stamping creates an edge rollover less than 0.70 mm in depth.

4. The brake plate of any preceding claim, wherein the stamping creates an edge rollover less than 1.8 mm in width.

5. The brake plate of any preceding claim, wherein the body is stamped to perfect flat or directional flatness of ±0.1 mm.

6. The brake plate of any preceding claim, wherein the body is stamped from a continuous metallic material.

7. The brake plate of any preceding claim, wherein the body is stamped from a precut workpiece of metallic material.

8. The brake plate of any preceding claim, wherein the forming includes applying a counterpressure to flatten the plate.

9. The brake plate of claim 8, wherein the plate is flattened while stamping.

10. The brake plate of claim 8, wherein the plate is flattened post-stamping.

11. The brake plate of claim of any preceding claim, wherein the material is steel.
